(19)

**Europäisches Patentamt**
**European Patent Office**
**Office européen des brevets**

(11) **EP 1 764 579 B1**

(12) **EUROPÄISCHE PATENTSCHRIFT**

(45) Veröffentlichungstag und Bekanntmachung des Hinweises auf die Patenterteilung:
**26.12.2007 Patentblatt 2007/52**

(51) Int Cl.:
**G01B 21/04** *(2006.01)*

(21) Anmeldenummer: **05020192.0**

(22) Anmeldetag: **16.09.2005**

(54) **Verfahren zur Bestimmung der Rechtwinkligkeit zwischen den Achsen eines 3D-Koordinatenmessgerätes**

Method to Determine the Orthogonality of the Axes of a Coordinate Measuring Machine

Procédé de détermination de l'orthogonalité des axes d'un appareil de mesure de coordonées

(84) Benannte Vertragsstaaten:
**CH DE FR GB IT LI**

(43) Veröffentlichungstag der Anmeldung:
**21.03.2007 Patentblatt 2007/12**

(73) Patentinhaber: **Hexagon Metrology GmbH**
**35578 Wetzlar (DE)**

(72) Erfinder:
• **Weber, Hartwig, Dr.**
**35398 Giessen (DE)**

• **Neumann, Jan, Dr.**
**35625 Hüttenberg (DE)**

(74) Vertreter: **Knefel, Cordula**
**Patentanwältin,**
**Postfach 1924**
**35529 Wetzlar (DE)**

(56) Entgegenhaltungen:
**EP-A- 1 225 423       DE-A1- 2 940 633**
**DE-A1- 10 122 080     DE-A1- 19 815 098**

EP 1 764 579 B1

Beschreibung

**Beschreibung**

Die Erfindung betrifft ein Verfahren zur Bestimmung von Rechtwinkligkeitsabweichungen zwischen der Z-Bewegungsachse eines 3D-Koordinatenmessgerätes gegenüber den beiden anderen Bewegungsachsen sowie ein Verfahren zur Korrektur dieser Rechtwinkligkeitsabweichungen eines 3D-Koordinatenmessgerätes.

Gemäß dem Stand der Technik werden in der Koordinatenmesstechnik häufig Drehtische in Verbindung mit 3D-Koordinatenmessgeräten eingesetzt, um die Zugänglichkeit des Werkstückes für das 3D-Koordinatenmessgerät zu verbessern. Dabei wird ein Drehtisch ortsfest im Koordinatensystem des 3D-Koordinatenmessgerätes platziert. Auf dem Drehtisch wird ein zu messendes Werkstück montiert. Wenn die Lage und Orientierung der Drehachse des Drehtisches im Koordinatensystem des Koordinatenmessgerätes der Steuerung des 3D-Koordinatenmessgerätes bekannt sind, lassen sich die verschiedenen Merkmale des Werkstückes sehr elegant in einem werkstückbezogenen Koordinatensystem messen, das von der Winkelstellung des Drehtisches unabhängig ist.

Nach dem Stand der Technik werden die Lage und Orientierung einer Drehachse eines Drehtisches auf einer Koordinatenmessmaschine dadurch bestimmt, dass eine auf dem Drehtisch von seiner Drehachse in radialer Richtung beabstandet montierte Kugel in verschiedenen Winkelstellungen des Drehtisches von der Koordinatenmessmaschine gemessen wird. Dabei liegen die Kugelmittelpunkte auf einer angenommenen Kreisbahn, die eine Ebene aufspannt, deren Ebenennormale im Kreismittelpunkt mit der Drehachse des Drehtisches zusammenfällt. Mit den in der Koordinatenmesstechnik üblichen und vorhandenen Methoden wird diese Ebenennormale als Drehachse des Drehtisches im Koordinatensystem des 3D-Koordinatenmessgerätes verankert und aus ihr ein Drehtischkoordinatensystem gebildet, das fest mit der Drehtischoberfläche verbunden ist.

Diesen Vorgang bezeichnet man als das so genannte "Einmessen des Drehtisches".

Dabei spielt die Rechtwinkligkeit der linearen Achsen des Koordinatenmessgerätes zueinander eine wichtige Rolle. Insbesondere die Rechtwinkligkeit derjenigen Achse des Koordinatenmessgerätes, die mit der Drehachse des Drehtisches den kleinsten Winkel einschließt (im Folgenden Z-Achse genannt) gegenüber den beiden anderen Achsen des Koordinatenmessgerätes, wirkt sich kritisch auf die Drehachsenbestimmung des Drehtisches aus. Der oben erwähnte Kugelkreis wandert parallel zu seiner Kreisebene, wenn die Kugeln in unterschiedlichen Höhen bezogen auf die Z-Achse gemessen werden und die Winkel zwischen der Z-Achse des Koordinatenmessgerätes und den beiden anderen Achsen nicht exakt 90° betragen. Damit ist die Lage der Drehachse des Drehtisches abhängig von der Höhe, in der die Kugeln über der Tischplatte gemessen werden, wodurch die Eindeutigkeit der Drehachse des Drehtisches verloren geht. Beim Messen eines Werkstückes müsste, abhängig von der Höhe des Messpunktes über der Drehtischplatte, für die anstehenden Koordinatentransformationen für jeden einzelnen Messpunkt jeweils eine andere Drehtischachsenlage zugrunde gelegt werden. Dies ist jedoch überhaupt nicht praktikabel.

DE 198 15 098 A1 beschreibt ein Verfahren zur Messung von Drehtischabweichungen. Gemäß diesem Verfahren wird lediglich der winkelstellungsabhängige Taumelwinkel des Drehtisches bestimmt.

DE 101 22 080 A1 beschreibt ein Verfahren zum Bestimmen der Orthogonalität der Achsen eines Koordinatenmessgerätes mit einem Drehtisch. Dabei wird ein Prüfkörper mit zwei Antastkugeln verwendet, die in einem radialen Abstand zur Drehachse des Drehtisches und in unterschiedlichen Abständen zur Drehtischoberfläche angeordnet sind. Die Mittelpunkte der beiden Kreise, welche die beiden Antastkugeln in verschiedenen Winkelstellungen des Drehtisches beschrieben werden, werden ermittelt und daraus wird die Neigung der Rotationsachse des Drehtisches zu den Bewegungsachsen des Koordinatenmessgerätes ermittelt.

Das der Erfindung zugrunde liegende technische Problem besteht darin, den Nachteil von Rechtwinkligkeitsabweichungen der Z-Achse des Koordinatenmessgerätes gegenüber den anderen Achsen zu vermeiden, indem bei dem Vorgang des Einmessens des Drehtisches die Rechtwinkligkeitsabweichung zwischen den linearen Bewegungsachsen eines 3D-Koordinatenmessgerätes ermittelt wird, sowie ein Verfahren zur Korrektur der Rechtwinkligkeitsabweichung zwischen den linearen Bewegungsachsen eines 3D-Koordinatenmessgerätes anzugeben.

Dieses technische Problem wird durch ein Verfahren mit den Merkmalen gemäß Anspruch 1 sowie durch ein Verfahren mit den Merkmalen gemäß Anspruch 4 gelöst.

Gemäß der Erfindung weist das Verfahren zur Bestimmung von Rechtwinkligkeitsabweichungen zwischen der Z-Bewegungsachse eines 3D-Koordinatenmessgerätes gegenüber den beiden anderen Bewegungsachsen folgende Verfahrensschritte auf:

- Messen eines ersten Prüfkörpers in verschiedenen Winkelstellungen eines Drehtisches, dessen Drehachse ungefähr parallel zur Z-Bewegungsachse des 3D-Koordinatenmessgerätes orientiert ist, wobei der Prüfkörper mit einem radialen Abstand zur Drehachse und mit einem ersten Abstand zur Drehtischoberfläche auf dem Drehtisch angeordnet ist,
- Auswerten eines ersten, unteren Kreises, der durch einen Bezugspunkt des Prüfkörpers in verschiedenen Winkelstellungen des Drehtisches beschrieben wird,
- Messen des ersten Prüfkörpers oder eines zweiten Prüfkörpers, der ebenfalls mit einem radialen Abstand zur Drehachse des Drehtisches und in einem zweiten Abstand zur Drehtischoberfläche auf dem Drehtisch angeordnet ist, in verschiedenen Winkelstellungen des Drehtisches,

- Auswerten eines zweiten, oberen Kreises, der durch einen Bezugspunkt des Prüfkörpers in dem zweiten Abstand in den verschiedenen Winkelstellungen des Drehtisches beschrieben wird,
- Projizieren des oberen Kreises auf den unteren Kreis,
- Bestimmen der Rechtwinkligkeitsabweichung der Z-Bewegungsachse gegenüber den beiden anderen Bewegungsachsen des 3D-Koordinatenmessgerätes aus der Höhendifferenz zwischen den Abständen der Prüfkörper über der Drehtischoberfläche und aus den Abständen der Kreismittelpunkte der beiden Kreise in Richtung der beiden anderen Bewegungsachsen des 3D-Koordinatenmessgerätes nach der Projektion.

Durch das erfindungsgemäße Verfahren ist es möglich, die Bestimmung der Rechtwinkligkeitsabweichung zwischen den Bewegungsachsen eines 3D-Koordinatenmessgerätes zusammen mit dem Einmessvorgang des Drehtisches zu bestimmen. Das Messen des ersten Prüfkörpers in verschiedenen Winkelstellungen des Drehtisches ist nämlich Teil des Einmessvorganges des Drehtisches, bei dem, wie oben im Stand der Technik beschrieben, die Kugel in verschiedenen Winkelstellungen des Drehtisches in der Koordinatenmessmaschine gemessen wird und hieraus, wie oben beschrieben, die Drehachse des Drehtisches bestimmt wird.

Gemäß dem erfindungsgemäßen Verfahren wird der erste Prüfkörper oder ein zweiter Prüfkörper zusätzlich in einem anderen Abstand zum Drehtisch ebenfalls in verschiedenen Winkelstellungen des Drehtisches gemessen. Handelt es sich bei dem Prüfkörper um eine Kugel, wird wiederum die Kreisbahn, auf der die Kugelmittelpunkte liegen, bestimmt.

Der radiale Abstand der Mittelpunkte der beiden Kreise wird bestimmt, wodurch wiederum die Rechtwinkligkeitsabweichung des 3D-Koordinatenmessgerätes bestimmt werden kann, da die Höhendifferenz zwischen den Prüfkörpern zwischen der ersten Messung und der zweiten Messung bekannt ist.

Die Verfahrensschritte des Messens und des Auswertens des oben beschriebenen Verfahrens können in geänderter Reihenfolge durchgeführt werden. Beispielsweise ist es möglich, erst die Prüfkörper in den beiden unterschiedlichen Abständen vom Drehtisch zu messen und anschließend die Auswertung durchzuführen.

Gemäß einer besonders bevorzugten Ausführungsform der Erfindung wird als Prüfkörper eine Kugel verwendet, deren Kugelmittelpunkt jeweils in den verschiedenen Winkelstellungen bestimmt wird.

Die Bestimmung der räumlichen Lage des Kreises, den die auf dem Drehtisch montierte Kugel beschreibt, erfolgt vorteilhaft mit den folgenden Schritten:

- Messung der Kugel mit mindestens vier Antastpunkten in mindestens drei Winkelstellungen des Drehtisches,
- Berechnen der Kugelmittelpunkte,
- Berechnen einer besteingepassten Ebene durch die Kugelmittelpunkte,
- Projizieren der Kugelmittelpunkte in die berechnete Ebene,
- Berechnen des Kreises, den die projizierten Kugelmittelpunkte in der berechneten Ebene beschreiben,
- Berechnen der Lage des Kreismittelpunktes des berechneten Kreises im Koordinatensystem des Koordinatenmessgerätes,
- Berechnen der Orientierung der Ebenennormalen der berechneten Ebene im Koordinatensystem des Koordinatenmessgerätes.

Durch die Bestimmung der Rechtwinkligkeitsabweichung gemäß dem erfindungsgemäßen Verfahren ist es möglich, mit einem Teil der beim Einmessen des Drehtisches ohnehin bestimmten Messwerte die Rechtwinkligkeitsabweichung des Koordinatenmessgerätes mit zu bestimmen.

Vorteilhaft werden mit den Werten der Rechtwinkligkeitsabweichung die Messwerte der Prüfkörper nachträglich korrigiert.

Gemäß einer weiteren vorteilhaften Ausführungsform des erfindungsgemäßen Verfahrens wird die Lage des Drehtisches aus den korrigierten Messwerten bestimmt, um die Messgenauigkeit zu erhöhen.

Gemäß einer weiteren vorteilhaften Ausführungsform des erfindungsgemäßen Verfahrens werden die ermittelten Rechtwinkligkeitsabweichungen zur Korrektur von durchzuführenden Antastungen herangezogen.

Weitere Merkmale und Vorteile der Erfindung ergeben sich anhand der zugehörigen Zeichnung, in der mehrere Ausführungsbeispiele des erfindungsgemäßen Verfahrens nur beispielhaft dargestellt sind. In der Zeichnung zeigen:

Fig. 1    die Bestimmung der Rechtwinkligkeitsabweichung eines Koordinatenmessgerätes beim Einmessen eines Drehtisches mit einer ungefähr parallel zu einer der Bewegungsachsen des 3D-Koordinatenmessgerätes angeordneten Drehachse;

Fig. 2    Bestimmung der Rechtwinkligkeitsabweichung mit einem Drehtisch, dessen Drehachse nicht exakt parallel zu einer der Bewegungsachsen des 3D-Koordinatenmessgerätes ausgerichtet ist.

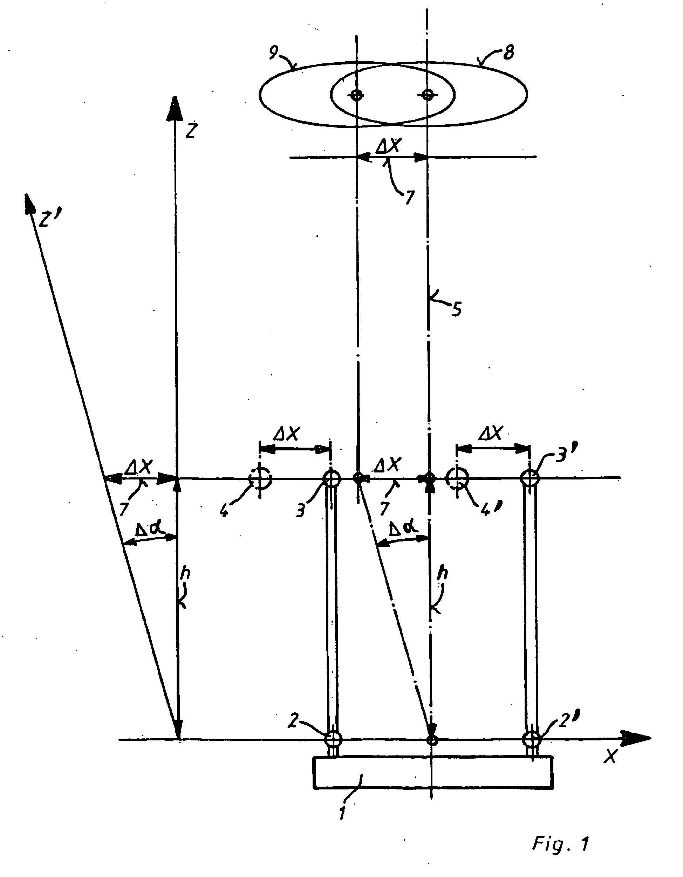

Gemäß Fig. 1 ist ein Drehtisch 1 auf einem 3D-Koordinatenmessgerät (nicht dargestellt) angeordnet. Eine physikalische Drehachse 5 des Drehtisches 1 ist ungefähr parallel zu einer Bewegungsachse des 3D-Koordinatenmessgerätes orientiert, nämlich zu der Z-Achse. Eine Einmesskugel 2 ist in zwei 180° versetzten Drehtischstellungen 2, 2' dargestellt. Im oberen Teil der Fig. 1 ist ein Kreis 8 dargestellt, den ein Kugelmittelpunkt der Einmesskugel 2 beschreibt, wenn der Drehtisch 1 verschiedene Winkelstellungen einnimmt.

Wenn die Einmesskugel 2 in einer um h von der Drehtischoberfläche beabstandeten Lage gemessen wird, ändert sich nichts an der gemessenen Lage der physikalischen Drehachse 5 im Koordinatensystem des 3D-Koordinatenmessgerätes, sofern dieses streng kartesisch aufgebaut ist, das heißt, der Winkel zwischen den Achsen (in Fig. 1 in X- und Z-Achse dargestellt) exakt 90° beträgt.

In der Praxis kommen durchaus Abweichungen von der Rechtwinkligkeit von mehreren Winkelsekunden vor, die dann dazu führen, dass die beiden Kreise 8 (gemessen mit der Kugel 2) und 9 (gemessen mit einer Kugel 3) nicht zu der gleichen gemessenen Lage der physikalischen Drehachse führen, sondern scheinbar zwei Drehachsen mit einem seitlichen Abstand von ΔX ergeben. Dies führt bei Messungen eines Werkstückes auf dem Drehtisch 1 unter Ausnutzung eines, mit Hilfe der, aus dem Kreis 8 erzeugten, gemessenen Drehachse, mitdrehenden Koordinatensystems zu Messfehlern, die mit wachsendem Abstand der Messpunkte von der Ebene des Kreises 8 immer größer werden.

Insbesondere bei 3D-Koordinatenmessgeräten, die in der Fertigung stehen und dort erheblichen Temperaturschwankungen ausgesetzt sind, ist die Stabilität der Rechtwinkligkeit der Verfahrachsen nicht unter allen Umständen gewährleistet.

Das erfindungsgemäße Verfahren nutzt den Effekt des höhenabhängigen Drehachsenversatzes zur Bestimmung der Rechtwinkligkeitsabweichung derjenigen Bewegungsachse des 3D-Koordinatenmessgerätes, die parallel zur Drehtischachse verläuft, zu den beiden anderen Achsen aus.

Bei dem erfindungsgemäßen Verfahren wird die Drehtischachse 5 zweimal mit je einer Kugel 2, 3, die in unterschiedlichen Höhen auf dem Drehtisch 1 montiert sind, durch Messen der oben beschriebenen Kreise 8, 9 bestimmt. Der obere Kreis 9 wird auf den unteren Kreis 8 projiziert. Dabei ergibt sich ein radialer Abstand ΔX der beiden Kreismittelpunkte in X-Richtung des Koordinatensystems des 3D-Koordinatenmessgerätes beziehungsweise ΔY in Y-Richtung (nicht dargestellt).

Aus diesem Abstand und der Höhendifferenz h der Kugeln über der Drehtischplatte lässt sich die Rechtwinkligkeitsabweichung Δα über die Formeln

Gl. 1 $$\Delta\alpha = \arctan\left(\frac{\Delta X}{h}\right) \text{ (für den Winkel}$$

ZX),

Gl. 2 $$\Delta\alpha = \arctan\left(\frac{\Delta Y}{h}\right) \text{ (für den Winkel}$$

ZY)

ermitteln.

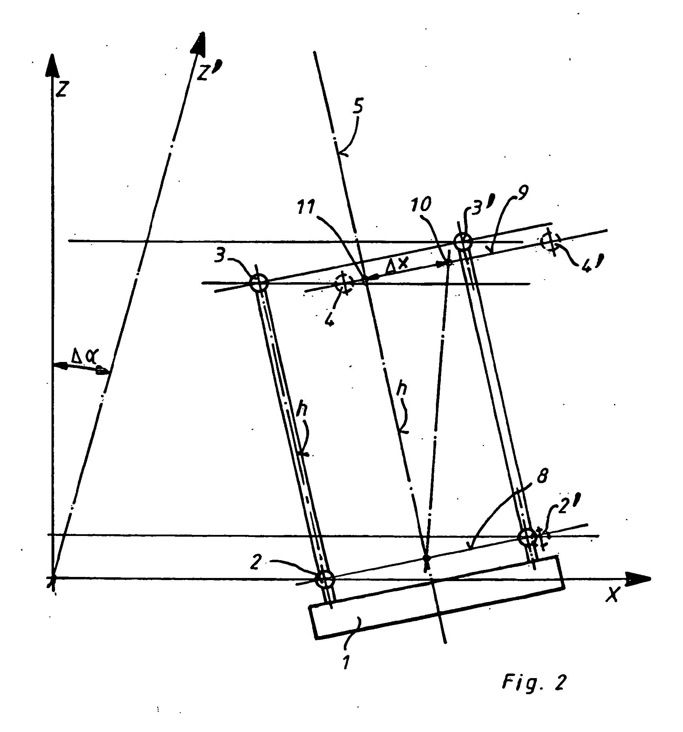

Gemäß Fig. 2 liegt die physikalische Drehachse 5 des Drehtisches 1 nicht exakt parallel zu einer der Bewegungsachsen des 3D-Koordinatenmessgerätes, im vorliegenden Fall zur Z-Achse. In diesem Fall durchlaufen die Einmesskugeln 2, 3 bezüglich dieser Bewegungsachse verschiedene Höhen. Dadurch wird die Kugel 2 in der 180°-Stellung beispielsweise mit einer etwas zu großen X-Koordinate gemessen. Dies führt zu einem leichten Kippen des Kreises 8 sowie zu einer elliptischen Verzerrung.

Beide Effekte treffen in gleichem Maße auch auf die obere Kugel 3 zu, so dass im Ergebnis die Winkelberechnung korrekt bleibt, wenn sie wie in Gleichung 1 oder Gleichung 2 durchgeführt wird und die beiden Ellipsen weiterhin als Kreise behandelt werden. Die Abstände ΔX und ΔY werden jetzt in der Kreisebene der unteren Kugel 2 nach Projektion des oberen Kreises 9 auf den unteren Kreis 8 bestimmt. Wie in Fig. 2 dargestellt, wird durch die Rechtwinkligkeitsabweichung des Koordinatenmessgerätes die Lage 4, 4' der Prüfkörper 3, 3' erfasst. Der durch die Lagebestimmung der Kugeln 3, 3' in der Lage 4, 4' ermittelte Kreis 9 und dessen Mittelpunkt 10 hat einen radialen Abstand ΔX von dem tatsächlichen Mittelpunkt 11, der auf der physikalischen Drehachse 5 liegt.

Bezugszahlen

| | |
|---|---|
| 1 | Drehtisch |
| 2 | Prüfkörper |
| 3, 3' | Prüfkörper |
| 4, 4' | Lage |
| 5 | Drehachse |
| 7 | Abstand ΔX |
| 8 | Kreis |
| 9 | Kreis |
| 10 | Mittelpunkt |
| 11 | Mittelpunkt in Höhe h |

**Patentansprüche**

1. Verfahren zur Bestimmung der Rechtwinkligkeitsabweichung zwischen der Z-Bewegungsachse eines 3D-Koordinatenmessgerätes gegenüber den beiden anderen Bewegungsachsen mit folgenden Verfahrensschritten:

a) Messen eines ersten Prüfkörpers (2) in verschiedenen Winkelstellungen eines Drehtisches (1), dessen Drehachse (5) ungefähr parallel zur Z-Bewegungsachse des 3D-Koordinatenmessgerätes orientiert ist, wobei der Prüfkörper (2) mit einem radialen Abstand zur Drehachse (5) und mit einem ersten Abstand zur Drehtischoberfläche auf dem Drehtisch (1) angeordnet ist,

b) Auswerten eines ersten, unteren Kreises (8), der durch einen Bezugspunkt des Prüfkörpers (2) in den verschiedenen Winkelstellungen des Drehtisches (1) beschrieben wird,

c) Messen des ersten Prüfkörpers (2) oder eines zweiten Prüfkörpers (3), der ebenfalls mit einem radialen Abstand zur Drehachse (5) des Drehtisches (1) und in einem zweiten Abstand zur Drehtischoberfläche auf dem Drehtisch (1) angeordnet ist, in verschiedenen Winkelstellungen des Drehtisches (1),

d) Auswerten eines zweiten, oberen Kreises (9), der durch einen Bezugspunkt des Prüfkörpers (2, 3) in dem zweiten Abstand in den verschiedenen Winkelstellungen des Drehtisches (1) beschrieben wird,

e) Projizieren des oberen Kreises (9) auf den unteren Kreis (8),

f) Bestimmen der Rechtwinkligkeitsabweichung der Z-Bewegungsachse gegenüber den beiden anderen Bewegungsachsen des 3D-Koordinatenmessgerätes aus der Höhendifferenz (h) zwischen den Abständen der Prüfkörper (2, 3) über der Drehtischoberfläche und aus den Abständen ($\Delta$X und $\Delta$Y) der Kreismittelpunkte der beiden Kreise (8, 9) in Richtung der beiden anderen Bewegungsachsen des 3D-Koordinatenmessgerätes nach der Projektion.

2. Verfahren nach Anspruch 1, bei dem die Verfahrensschritte b) und c) in vertauschter Reihenfolge durchgeführt werden.

3. Verfahren nach einem der Ansprüche 1 oder 2, wobei als Prüfkörper (2, 3) eine Kugel verwendet wird.

4. Verfahren zur Korrektur der Rechtwinkligkeitsabweichung zwischen der Z-Bewegungsachse eines 3D-Koordinatenmessgerätes gegenüber den beiden anderen Bewegungsachsen, bei dem die Rechtwinkligkeitsabweichung mit einem Verfahren nach einem der Ansprüche 1 bis 3 bestimmt wird, und die Messwerte der Prüfkörper (2, 3) mit den ermittelten Rechtwinkligkeitsabweichungen nachträglich korrigiert werden.

5. Verfahren nach Anspruch 4, wobei aus den korrigierten Messwerten die Lage der Drehachse (5) bestimmt wird.

6. Verfahren nach Anspruch 4, wobei die ermittelten Rechtwinkligkeitsabweichungen zur Korrektur von durchzuführenden Antastungen herangezogen werden.

**Claims**

1. A method of determining the rectangularity deviation between the Z-movement axis of a 3D co-ordinate-measuring machine with respect to the two other movement axes having the following method steps:

   a) measuring a first test body (2) in different angular settings of a turntable (1), the axis of rotation (5) of which is oriented substantially parallel to the Z-movement axis of the 3D co-ordinate-measuring machine, wherein the test body (2) is arranged on the turntable (1) at a radial distance from the axis of rotation (5) and at a first distance from the surface of the turntable,
   b) evaluating a first, lower circle (8) which is described by a reference point of the test body (2) in the different angular settings of the turntable (1),
   c) measuring the first test body (2) or a second test body (3) which is likewise arranged on the turntable (1) at a radial distance from the axis of rotation (5) of the turntable (1) and at a second distance from the surface of the turntable, in different angular settings of the turntable (1),
   d) evaluating a second, upper circle (9) which is described by a reference point of the test body (2, 3) at the second distance in the different angular settings of the turntable (1),
   e) projecting the upper circle (9) onto the lower circle (8), and
   f) determining the rectangularity deviation of the Z-movement axis with respect to the two other movement axes of the 3D co-ordinate-measuring machine from the difference in height **(h)** between the distances of the test bodies (2, 3) above the surface of the turntable and from the distances ($\Delta$**X** and $\Delta$**Y**) of the centres of the two circles (8, 9) in the direction of the two other movement axes of the 3D co-ordinate-measuring machine after the projection.

2. A method according to Claim 1, in which the method steps b) and c) are carried out in a reversed sequence.

3. A method according to any one of Claims 1 to 2, wherein a sphere is used as the test body (2, 3).

4. A method of correcting the rectangularity deviation between the Z-movement axis of a 3D co-ordinate-measuring machine with respect to the two other movement axes, in which the rectangularity deviation is determined by a method according to any one of Claims 1 to 3, and the measurement values of the test bodies (2, 3) are subsequently corrected with the rectangularity deviations determined.

**5.** A method according to Claim 4, wherein the position of the axis of rotation (5) is determined from the corrected measurement values.

**6.** A method according to Claim 4, wherein the rectangularity deviations determined are used to correct sensings to be carried out.

**Revendications**

**1.** Procédé de détermination de l'écart d'orthogonalité entre l'axe de déplacement Z d'un appareil de mesure des coordonnées en 3D et les deux autres axes de déplacement, comprenant les étapes de procédé suivantes :

a) mesure d'un premier échantillon (2) dans diverses positions angulaires d'une table rotative (1), dont l'axe de rotation (5) est orienté à peu près parallèlement à l'axe de déplacement Z de l'appareil de mesure des coordonnées en 3D, l'échantillon (2) étant disposé sur la table rotative (1) à une distance radiale par rapport à l'axe de rotation (5) et à une première distance par rapport à la surface de la table rotative,

b) évaluation d'un premier cercle inférieur (8) qui est décrit par un point de référence de l'échantillon (2) dans les diverses positions angulaires de la table rotative (1),

c) mesure du premier échantillon (2) ou d'un second échantillon (3) qui est disposé également à une distance radiale par rapport à l'axe de rotation (5) de la table rotative (1) et à une seconde distance par rapport à la surface de la table rotative (1) dans diverses positions angulaires de la table rotative (1),

d) évaluation d'un second cercle supérieur (9) qui est décrit par un point de référence de l'échantillon (2, 3) à la seconde distance dans les diverses positions angulaires de la table rotative (1),

e) projection du cercle supérieur (9) sur le cercle inférieur (8),

f) détermination de l'écart d'orthogonalité entre l'axe de déplacement Z et les deux autres axes de déplacement de l'appareil de mesure des coordonnées en 3D par la différence de hauteur (h) entre les distances des échantillons (2, 3) au-dessus de la surface de la table rotative et par les distances ($\Delta X$ et $\Delta Y$) des centres des deux cercles (8, 9) en direction des deux autres axes de déplacement de l'appareil de mesure des coordonnées en 3D après la projection.

**2.** Procédé selon la revendication 1, dans lequel les étapes de procédé b) et c) sont effectuées dans l'ordre inverse.

**3.** Procédé selon l'une quelconque des revendications 1 à 2, dans lequel une sphère est utilisée comme échantillon (2, 3).

**4.** Procédé de correction de l'écart d'orthogonalité entre l'axe de déplacement Z d'un appareil de mesure des coordonnées en 3D (2) et les deux autres axes de déplacement, dans lequel l'écart d'orthogonalité est déterminé à l'aide d'un procédé selon l'une quelconque des revendications 1 à 3, et les valeurs de mesure des échantillons (2, 3) sont corrigées ultérieurement à l'aide des écarts de orthogonalité déterminés.

**5.** Procédé selon la revendication 4, la position de l'axe de rotation (5) étant déterminée à partir des valeurs de mesure corrigées.

**6.** Procédé selon la revendication 4, les écarts d'orthogonalité déterminés étant mis à contribution pour corriger les palpations à effectuer.

*Fig. 1*

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19815098 A1
- DE 10122080 A1